# EUROPEAN PATENT SPECIFICATION

(11) **EP 3 526 793 B1**
(45) Date of publication and mention of the grant of the patent: **27.01.2021**
(21) Application number: 17784258.0
(22) Date of filing: 09.10.2017
(51) Int. Cl.: G11B 3/60, G11B 19/20

(54) **GRAMOPHONE WITH A TURNTABLE, LEVITATING ON A MAGNETIC CUSHION**
GRAMMOPHON MIT EINEM PLATTENTELLER FREISCHWEBEND AUF EINEM MAGNETISCHEN KISSEN
GRAMOPHONE AVEC PLATINE-DISQUE EN LÉVITATION SUR UN COUSSIN MAGNÉTIQUE

(30) Priority: 12.10.2016 SI 201600253
(43) Date of publication of application: 21.08.2019
(73) Proprietor: Mag-lev Audio D.O.O., 5000 Nova Gorica (SI)
(72) Inventor: SMRTNIK, Sebastijan, 1360 Vrhnika (SI); PEGAN, Aleksander, 5000 Nova Gorica (SI); PEGAN, Tomaz, 5000 Nova Gorica (SI); FURLAN, Davorin, 6222 Stanjel (SI); DOLES, Tadej, 6222 Stanjel (SI); KOS, Dejan, 8233 Mirna (SI); SMRTNIK, Klemen, 1360 Vrhnika (SI); ISLAMOVIC, Damir, 1360 Vrhnika (SI)
(74) Representative: Jersan, Tatjana
(86) International application number: PCT/EP2017/075699
(87) International publication number: WO 2018/069256

(56) References cited:
- JP-A- S4 886 503
- JP-A- S5 677 952
- JP-A- H01 311 401
- JP-A- S56 140 562
- Sa Rogers: "For the Record: 13 Modern & Conceptual Turntable Designs | Urbanist", , 30 March 2015 (2015-03-30), XP055429948, Retrieved from the Internet: URL:https://weburbanist.com/2015/03/30/for -the-record-13-modern-conceptual-turntable -designs/ [retrieved on 2017-11-29]
- Erwin -: "Flynote: zwevende platenspeler met Nederlandse inbreng - Apparata", , 19 April 2014 (2014-04-19), XP055429938, Retrieved from the Internet: URL:https://www.apparata.nl/nieuws/flynote -zwevende-platenspeler-met-nederlandse-inb reng-6802 [retrieved on 2017-11-29]
- Anonymous: "Animafix", , 20 July 2014 (2014-07-20), XP055429968, Retrieved from the Internet: URL:http://animafix.borisjankovic.com/tag/ flynote/ [retrieved on 2017-11-29]

## Description

### Subject of the invention

The subject of the invention is a gramophone or record player having a rotatable turntable to play music recordings from analogue sound carriers, i.e. vinyl records, where in comparison to the established technology the turntable is not hinged and driven by mechanical machine elements, however, it is levitating above the housing of the gramophone and it spins with the help of electromagnetic forces. The other components of the gramophone can remain substantively unchanged according to the existing established turntables, however, the shape and style can be adapted to the new image of the device. The technology of the levitating turntable, where the vinyl record is located, does not change the fundamental elements of the analogue gramophone device, which means that for its comprehensive realization other technical and commercially established parts of analogue turntables can be used. Besides the advantage in sound processing, the new technology upgrades the level of visual experience when listening to music, since the levitating and rotating turntable together with the sound carrier has a surreal and superlative effect on the listener, hence the whole experience of listening to music artistic creations is even greater.

### Technical issue

Classic gramophones which may also be denoted as record player are used for the purpose of reproduction of sound, recorded into an analogue vinyl in the shape of a groove, which is engraved on both sides of the record, generating spiral patterns and running from the outside edge towards its geometric centre. Crudely, the gramophone consists of a housing with electric and navigation-switching elements, motor drive, turntable, movable tonearm and electromagnetic pickup with a stylus. The latter moves in all directions as it slides on the vinyl groove. Through vibrations in the attachment point, electromagnetic impulses are created, which are then appropriately amplified by the loudspeaker units, thus interpreting the sound experience to the listener.

The main characteristic of a good gramophone is that the vinyl record is rotated with an appropriate and steady speed without any unwanted accelerations, decelerations and with as little vibrations as possible.

The main reasons for the unsteady rotation of the vinyl with most classic gramophones are an unstable voltage, which drives the electric motor, and the variable friction of the belt transmission, which transmits the rotation from the driving axle of the motor to the powered axle of the turntable.

Unwanted vibrations can be created by the gramophone device itself due to the poor quality of the electrical and mechanical components. An even more common reason for vibrations is the surrounding space, hence vibrations occur for example due to walking on an unstable floor in the room with the gramophone, due to unwanted touches of the gramophone or the gramophone plinth during its operation, or due to sound vibrations caused by the strongly amplified music alone. Nowadays, the producers muffle the unwanted vibrations with various turntable suspension systems or with an appropriate choice of turntable suspension materials. The more prestigious versions of gramophones solve this problem with a very heavy turntable and also an oversized mass of the whole device, which leads to high costs of gramophone production as well as a high price of other music components, coinciding with such an expensive gramophone in style and quality.

A belt transmission is in practice most commonly used for the transmission of rotation from the driving axle of the electric motor to the powered axle of the turntable. The motor is usually located under the turntable outside its pivot and it transmits the kinetic rotational energy to the turntable with the help of a plastic belt which reduces disturbances in the low frequency range, since the belt absorbs most of the friction and disturbances, caused by the motor. A direct drive is also used and is enabled by contemporary stepping electric motors, however, these motors must be designed in such a way that they do not produce any low-frequency noise on the pickup.

The turntable tonearm's job is to hold the pickup with the stylus above the vinyl. The stylus follows the spiral shape of the groove which is engraved on the record. The tonearm must hold the pickup above the spiral groove as precisely as possible and at the same time with as little friction as possible, while slightly pushing it. The ideal tonearm would be weightless, and would require no force for travelling in the lateral direction according to the spiral track, and would at the same time be extremely rigid and without its own vibrations. Its vertical tracking angle on the spiral groove should be exactly the same throughout its full length, however, due to technological barriers and the high price this is in general not the case with the exception of top-quality devices.

The tangential tonearm is recognized as the best tonearm in the world. One of the best tangential tonearms is owned by a Slovenian producer Kuzma Air Line, since it ensures that the vertical tracking line of the magnetic pickup is the same at the beginning and end of the recording. Due to air suspension the tonearm is at all times rigid and does not produce vibrations, but it evenly tracks the spiral groove.

In general, there are two types of magnetic pickups at the end of the tonearm: with moving magnets (MM) and with a moving coil (MC). Both types function are based on electromagnetic induction. With both of them the turntable stylus is able to move in all directions and thereby it creates a weak magnetic field, resulting in a weak electric current. The difference between MM and MC pickups is in the core of the pickup: there, the MM pickup contains magnets and the MC pickup contains coils. The MM pickup produces a voltage of up to 5mV, therefore it is suitable for basic turntable preamplifiers. The MC pickup has a lower impedance and produces only 0.2mV, therefore it requires a more precise and complex turntable preamplifier to amplify the signal, and the result is a better dynamic in sound and more accurate readings of sound sequences in the low-frequency range. There are also pickups with a moving iron (MI), whose quality is closer to the MC pickups. Optical heads, which scan the groove shape on the surface of the vinyl record and then decode the sound via computer, have not experienced the commercial breakthrough and are rarely used.

A gramophone record (or a phonograph record, or simply a record) is an analogue sound carrier of a round-flat shape with an engraved spiral groove which starts on the peripheral side and ends in the centre of the record. The term LP ("long play") record refers to records where the recording of the original sound can be listened to at 33 revolutions per minute (LP 33 rpm or 33 1/3rpm). The other markings 16 rpm, 45rpm and 78rpm refer to different speeds and do not have the "LP" marking. Before 1950 records were made of shellac, later they were mostly made of polyvinyl chloride (PVC), hence the name vinyl record or vinyl (source: Wikipedia - The Free Encyclopaedia).

Documents JP S56 77952 A and JP H01 311 401 A disclose rotating disks held in position by magnetic forces. Furthermore, some design examples for magnetic levitation gramophones can be found in SA Rogers: "For the Record: 13 Modern & Conceptual Turntable Designs/Urbanist", 30 March 2015 (2015-03-30), XP055429948, https://weburbanist.com/2015/03/30/for-the-record-13-modern-conceptual-turntable-designs.

The device according to the invention solves the following technical problems: how to ensure the rotating of the music medium, i.e. the analogue gramophone record, to be as steady and without vibrations as possible at a relatively low mass of the turntable, how to reduce the wear of the mechanical parts of the record coming into contact and the stylus to the lowest possible degree, and at the same time to improve the visual effect of the device which would raise this in a way outdated technology back to the level, interesting to a wider audience.

### Solution to a technical problem

It is the object of the present invention to provide a gramophone (record player) that prevents vibration of the housing to be transmitted to the turntable.

The above object is solved by the claimed matter according to the independent claim 1.

Accordingly, there is provided a gramophone, including a turntable being adapted to support a sound recording carrier, preferably a vinyl record, a housing, a tonearm carrier, a tonearm, a magnetic pickup with a turntable stylus, wherein the gramophone further comprises:
a first turntable-side permanent magnet , at least one first housing-side permanent magnet, and first electromagnetic correction coils, the electromagnetic correction coils being adapted to control a levitation of the turntable above the housing by means of electromagnetic forces, which are created by the turntable-side permanent magnet and by the housing-side permanent magnet, and
second turntable-side permanent magnets and drive electromagnetic coils adapted to control a rotation of the turntable by means of electromagnetic forces, which are created by the second turntable-side permanent magnets.

According to the invention, a gap between an upper surface of the housing and a lower surface of the turntable is in a range from 1 to 200mm, preferably 30 to 50mm, said gap defining the height of levitation in accordance to the created magnetic field strength.

Preferably, the turntable comprises a disc, preferably made of plastics, wherein the disc has in its geometric centre on its upper side a metal tip adapted to centre a sound recording carrier, wherein preferably a diameter of the disc is equal to or slightly greater than the diameter of a long play vinyl record, which is about 280 to 300mm, especially 290mm.

Preferably, the disc has a plurality of recesses or grooves, each recess or groove being adapted to house one of the second turntable-side permanent magnets.

Preferably, the recesses or grooves have a bottom being part of a lower surface of the disc, and an opening directed to the inside or to the upper surface of the disc, so that the second turntable-side permanent magnets are secured in the disc invisibly to a user.

Preferably, the second turntable-side permanent magnets are distributed at an outer rim of the disc in the shape of a ring, wherein the second turntable-side permanent magnets are equally distributed along a circumferential direction of the disc.

Preferably, a distance between two neighbouring second turntable-side permanent magnets is about 2cm to 10cm, preferably about 4cm to 6cm, wherein the number of second turntable-side permanent magnets is a multiple of the number of drive electromagnetic coils.

Preferably, the second turntable-side permanent magnets are disc-shaped having a diameter from 5 to 20mm, preferably 8 to 12mm, wherein the height of the second turntable-side permanent magnet is from 1 to 10mm, preferably 3 to 5mm.

Preferably, a second disc made of soft iron is rigidly secured to the upper surface of the disc and is recessed throughout its entire thickness into the disc, so that the second disc is not visible to a user.

Preferably, the thickness of the second disc ranges from 0.1 to 2.5mm, preferably 0.3 to 0.7mm, the outer diameter of the second disc is smaller than the diameter of the disc by 1 to 10mm, preferably 2 to 4mm, and wherein preferably the second disc has in its geometric centre a round hole with a diameter that allows the passage of the metal tip of disc.

Preferably, a vertical distance of the second disc to the first and second turntable-side permanent magnets is from 2 to 50mm, preferably 5 to 15mm.

Preferably, the turntable comprises a coating, made in the shape of a disc with an external diameter being the same as the diameter of the disc, said coating is removably arranged on the upper side of the disc, wherein preferably said coating is made of synthetic or natural materials, preferably jute or felt or rubber.

Preferably, the disc comprises at its lower side a plurality of reflection surfaces for the specular reflection of light, wherein the reflection surfaces are recessed in the lower surface of the disc.

Preferably, the reflection surfaces are evenly distributed along a ring shape, wherein preferably their number is equal to the number of the second turntable-side permanent magnets.

Preferably, the housing comprises a plurality of light sensors, preferably two light sensors, adapted to separate a difference of light reflection and to thus scan the rotational speed of the disc through the reflection of the reflection surfaces.

Preferably, the first turntable-side permanent magnet is mounted inside the disc and preferably is a permanent neodymium magnet, preferably in the shape of a uniform magnetic circular plate with its centre in the geometric centre of the disc, wherein preferably the inner diameter of the circular plate is in a range of 2 to 8cm, preferably 3 to 5cm, wherein preferably the cross-section area of the first turntable-side permanent magnet is about 100mm², wherein preferably the first turntable-side permanent magnet is located within the thickness of the disc, so that it is thus mechanically secured and hidden from sight.

Preferably, the gramophone comprises a plurality of the first housing-side permanent magnets, which are arranged in a ring of preferably the same diameter as the diameter of the first turntable-side permanent magnet, wherein preferably the first housing-side permanent magnets are provided inside the housing, preferably just below its surface, wherein preferably the number of first housing-side permanent magnets is 1 to 50, preferably 4.

Preferably, the gramophone comprises a plurality of electromagnetic correction coils, preferably 4 electromagnetic correction coils, wherein the electromagnetic correction coils are evenly distributed within the ring of first housing-side permanent magnets.

Preferably, the gramophone further comprises a plurality of support feet adapted to mechanically support and deposit the turntable while the gramophone is in its resting position.

Preferably, on the housing of the gramophone four support feet are installed, wherein preferably each support foot has a circular cross-section and a conical shape in its upper part, so that the turntable is supported by the tips of these cones.

Preferably, the feet pass vertically through an upper plate of the housing through corresponding holes, preferably using a spindle mechanism and a servomotor, wherein the holes are evenly distributed along an imaginary circle with its centre in the axis, and the diameter of the imaginary circle is substantially the same as the mean diameter of a circular groove in the turntable.

Preferably, the feet in their lower inactive level are hidden in the housing to such an extent that their conical upper parts remain visible, wherein preferably the feet are adapted to be lifted evenly and synchronized up to a height which exceeds the height of the turntable by 1 to 10mm, preferably 2 to 4mm.

Preferably, the diameter of the feet is from 5 to 20mm, preferably 8 to 12mm, the height of the conically shaped upper part is from 1 to 10mm, preferably 2 to 4mm, wherein preferably the feet in their raised position rest with the conically shaped tip against the circular groove of the disc, the width of the circular groove being from 0.5 to 10mm, preferably 1 to 3mm less than the diameter of the feet cross-section.

Preferably, the gramophone further comprises a switch adapted to turn on and off the gramophone, wherein the a switch is preferably adapted to take three positions, first for switching off the device, secondly for turning on and rotating the turntable at 33.3 revolutions per minute, and thirdly for turning on and rotating the turntable at 45 revolutions per minute.

Preferably, the gramophone further comprises a system for ambient lighting, the system preferably having ring light which is recessed in the upper surface of the housing, preferably so deep that the edge surface of the ring light is level with the surface of the housing.

Preferably, the gramophone further comprises a control unit adapted to control levitation of and rotation of the turntable by controlling the power and direction of electric current to create according respective magnetic fields of the first electromagnetic correction coils and/or of the drive electromagnetic coils.

The invention is explained in detail with the description of the case with respect to the embodiment shown in the annexed drawings, which show the following:

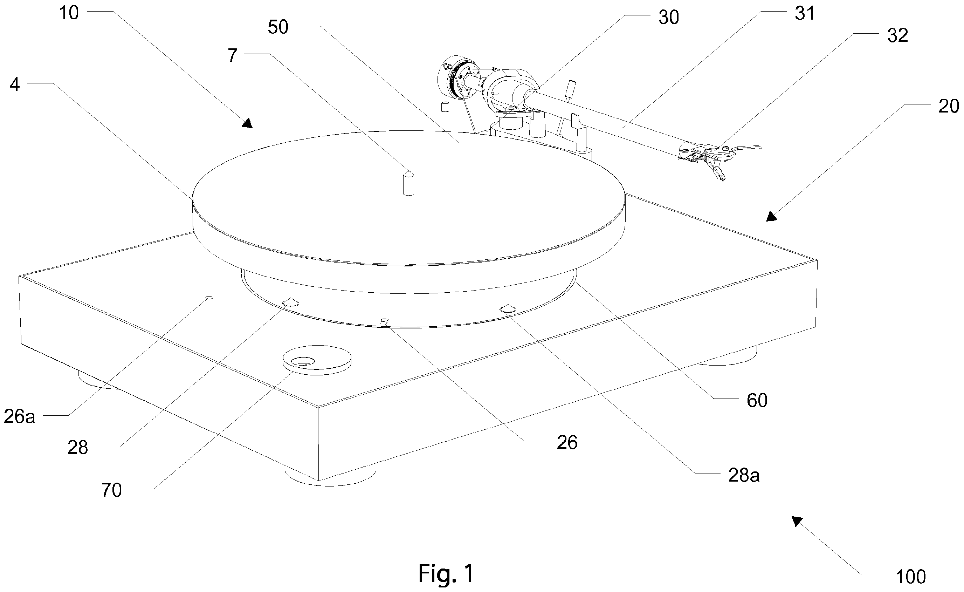

**Fig. 1** An orthogonal projection of the entire gramophone device **100.**

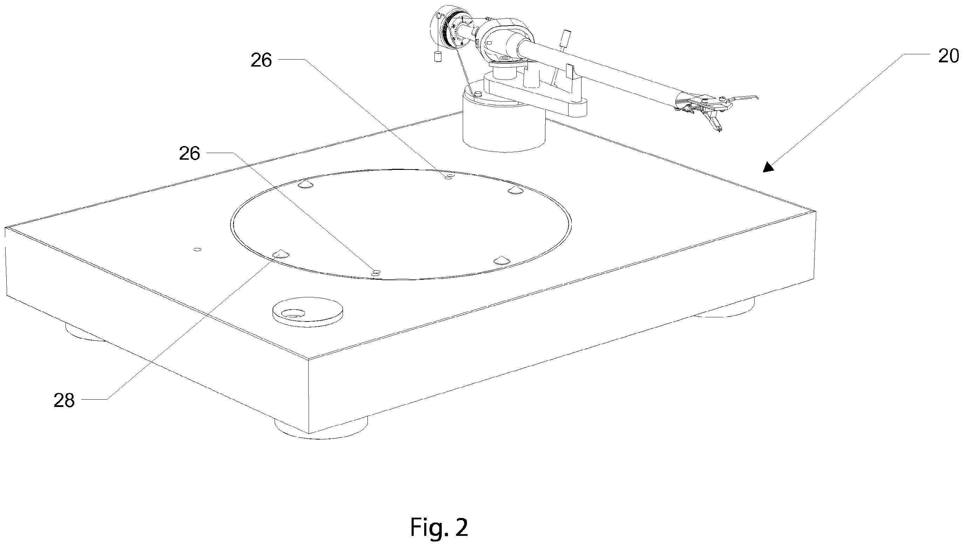

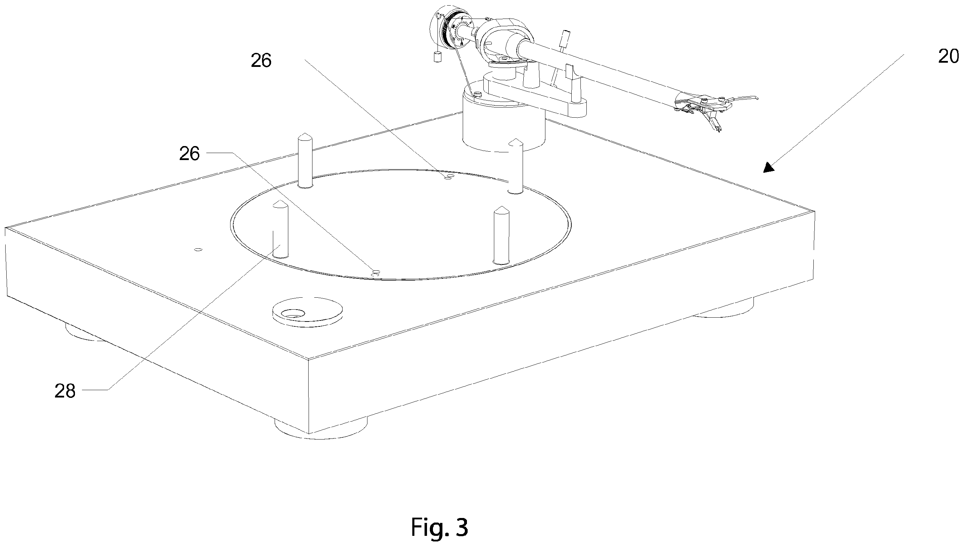

**Fig. 2****,** **3** An orthogonal projection of the gramophone device **100** without the turntable **10,** because directly under the turntable **10** on the device housing there are visible movable feet **28** and holes **28a,** at one time in the lower inactive level and at other time in the upper active (support) level.
**Fig. 4****,** **5** The elevation view of the gramophone device **100,** first as the turntable **10** levitates above the magnetic cushion during operation, and secondly, as the turntable 10 is supported by the feet **28** during the sleep mode. In figure 5, a cross-section shows in detail how the feet **28** rest against the circular groove **8.**
**Fig. 6****,** **7** The layout schematic view of the turntable **10** schematically shows how the permanent magnets and other components as well as the corresponding cross-section are arranged inside.
**Fig. 8****,** **9** The layout schematic view of the turntable housing schematically shows how the permanent magnets, electromagnetic coils and servomotors as well as the corresponding cross-section are arranged inside.

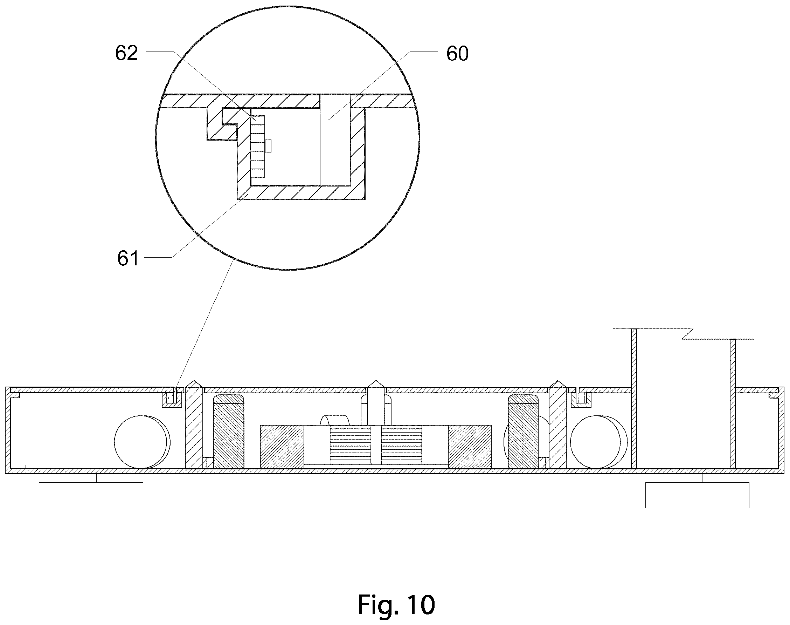

**Fig. 10** A subset for the ambient lighting **60, 61, 62** of the gramophone device **100** is shown schematically.

In the following description reference is made to according figures showing the respective reference signs even if the respective figure(s) is not mentioned in any case.

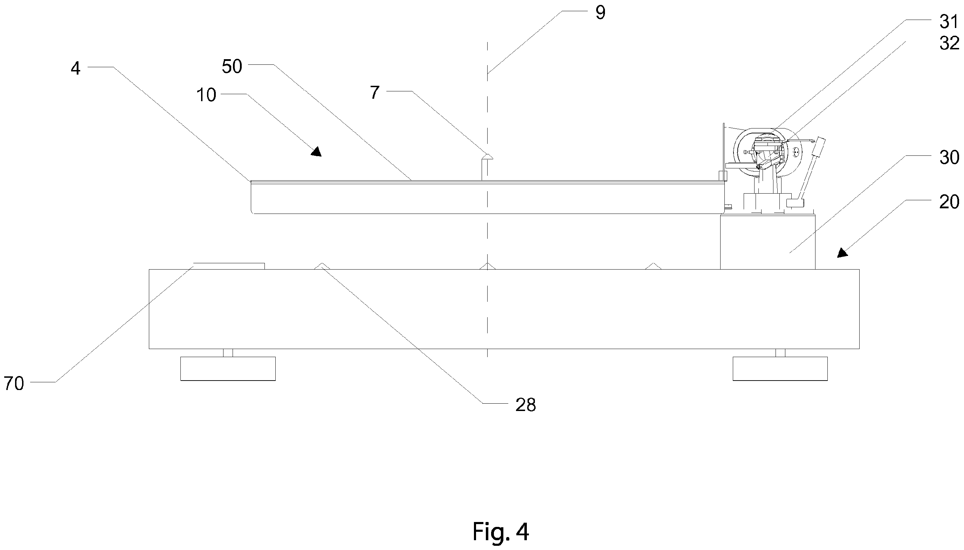

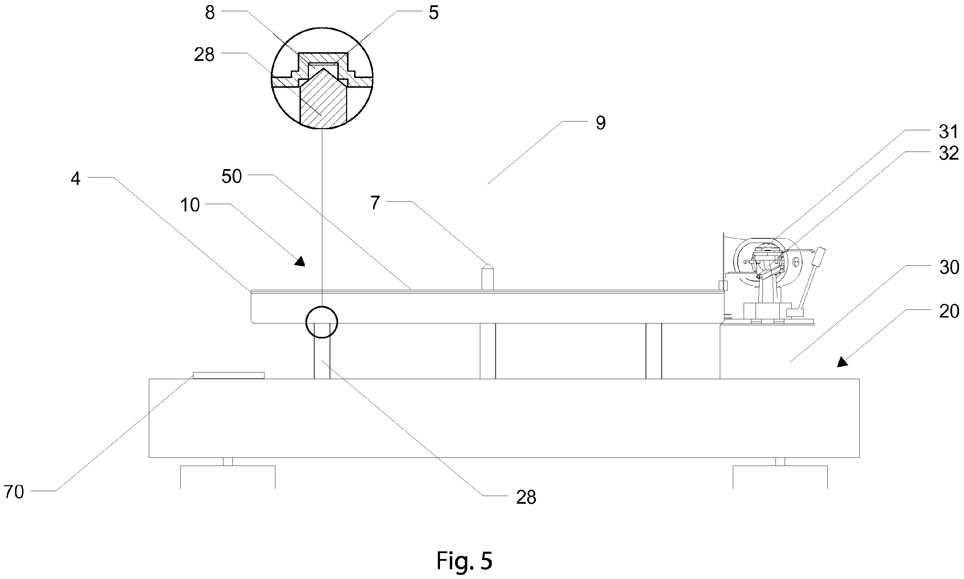

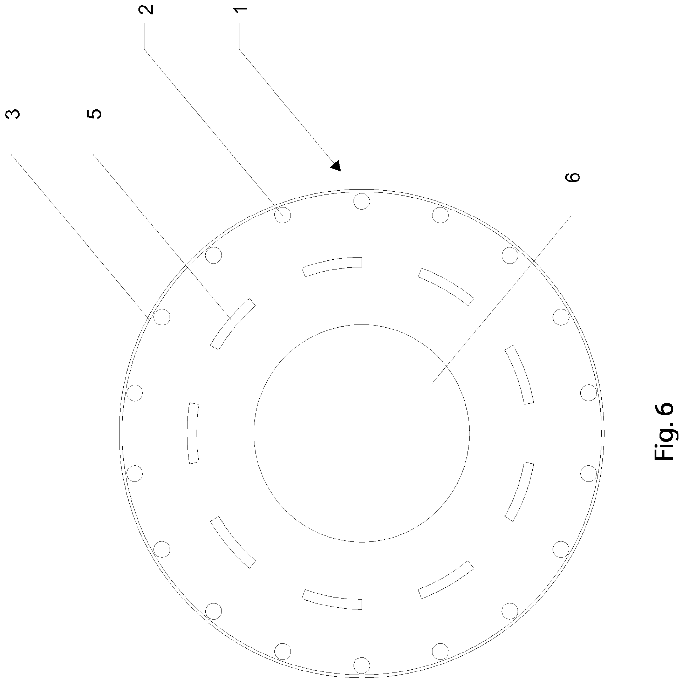

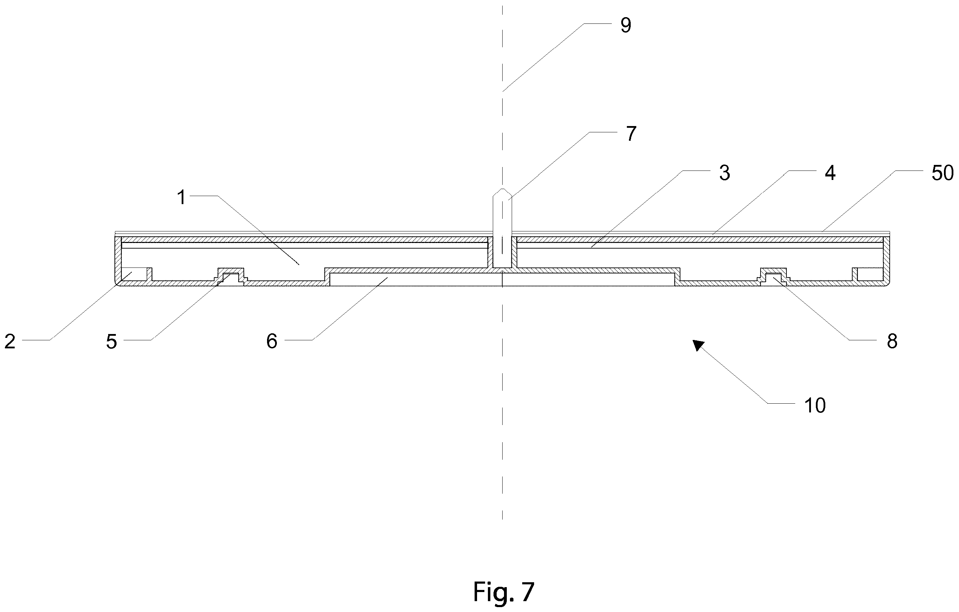

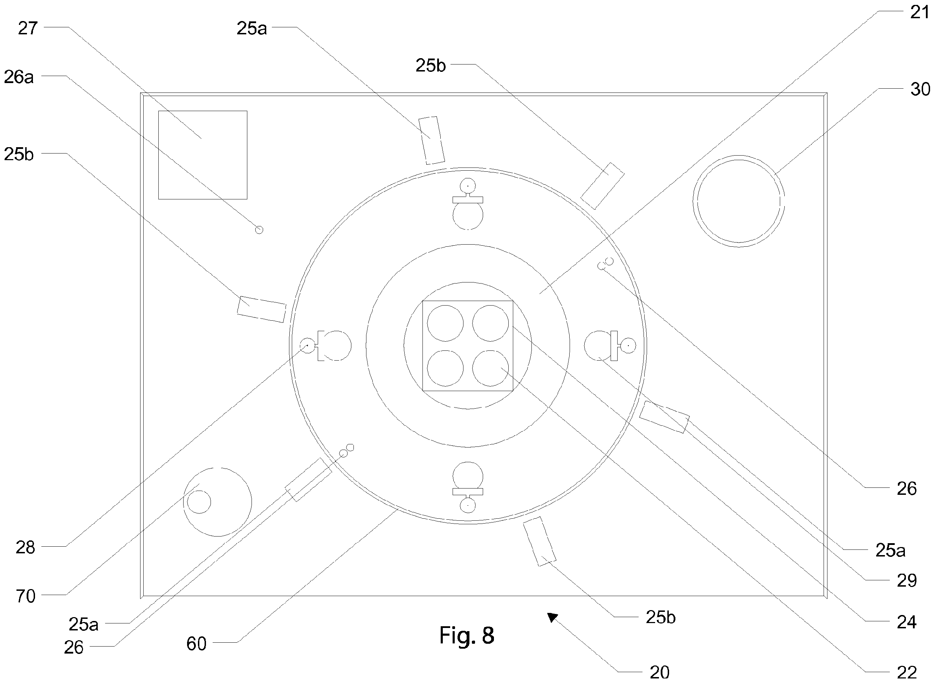

The basic components of the turntable of the gramophone 100 according to the invention (being also denoted as device 100 in the following description) are as follows:
A turntable **10,** which is comprises the following sub-elements (fig. 6, 7): Plastic disc **1,** in which the holes for the permanent magnets **2, 6** and the ring **3** are located. A ring of disc permanent neodymium magnets **2,** which are distributed inside the disc **1** throughout its outer circle. Disc **3** (second disc), made of soft iron, is rigidly secured and recessed into the upper surface of the disc **1** and it has the same centre as the disc **1.** Jute cover (felt) **4,** which covers the upper surface of the disc **1.** A light reflector **5** on the bottom surface of the disc **1** is intended to regulate the speed of the disc **1** and reflect light, preferably towards the two light sensors **26** (fig. 8), which are placed underneath in the housing **20** of the device **100** at a distance of preferably within one quarter of the length of the circle with the centre in point **9.** Permanent magnet **6,** preferably in the form of a circular plate with a rectangular cross-section is responsible for the levitation of the disc **1** above the housing **20** of the device **100** during operation. A metal tip **7** for fixing and centring the vinyl records **50** to the disc **10.** A circular groove **8,** at the bottom of which the light reflectors **5** are installed (fig. 5, 7). During resting position of the device **100,** the support feet **28** rest against the outer edge of the circular groove. The rotation axis **9** of the disc **1** (fig. 4, 5, 7, 9).

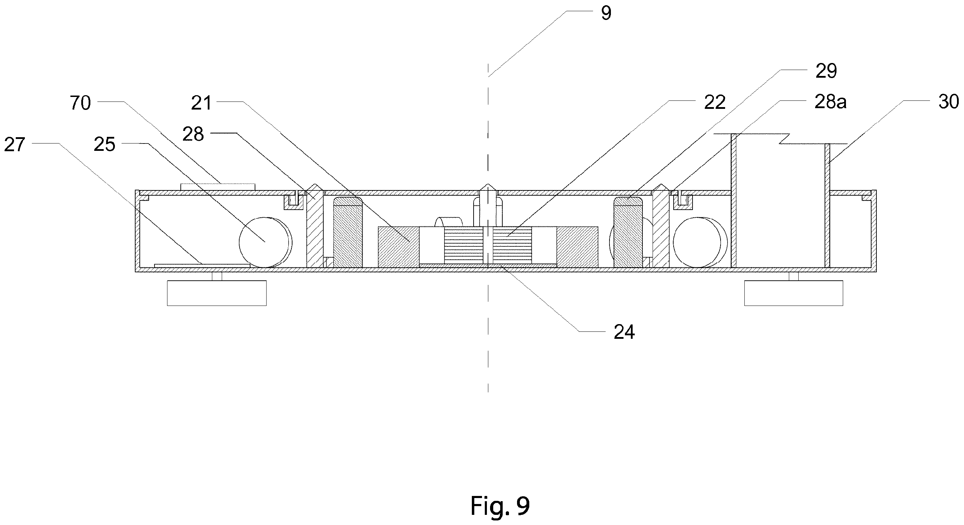

The housing **20** comprises of the following elements (fig. 8, 9): Permanent neodymium magnets **21** create the magnetic field, which in combination with the magnet **6** inside the disc **1** enables the levitation of the turntable **10** above the housing **20** in the axis **9.** The electromagnetic correction coils **22** are responsible for balancing and centring the turntable's **10** rotation, which would otherwise be thrown from the axis **9** by the magnetic field between the permanent magnets **6** and **21.** A microcontroller **27** controls the stabilization and centring of the turntable **10.** The drive electromagnetic coils **25** for rotating the turntable **10.** Preferably two optical elements **26** to control the speed of the turntable's **10** rotation. An optical element **26a** to control the height of the turntable **10.** The microcontroller **27** to control the speed of rotation of the turntable **10.** The support feet **28** with servomotors **29** are intended to mechanically support and place the turntable down **10** when the device **100** is in the resting position. The light ring **60** for ambient lighting the levitating turntable **10** with the circular carrier **61** and the LED strip **62,** enabling multi-coloured lighting of different intensities. Switch **70** for turning the device **100** on and off, which can take three positions: Switching off the device **100,** turning on and rotating the turntable **10** at 33.3 revolutions per minute, turning on and rotating the turntable **10** at 45 revolutions per minute. The turntable tonearm carrier **30,** turntable tonearm **31** and the magnetic pickup with the turntable stylus **32.** Protective dust cover (not shown). Carrier of the sound recording - vinyl record **50.**

The technology of the turntable **10** which levitates on a magnetic cushion ensures that no vibrations, which result in shaking of the device housing **20** due to unwanted touches or due to shaking of its plinth or ground during operation, are transmitted to the medium with the sound recording **50,** i.e. the vinyl record. A possible unwanted external vibrations which could be transmitted to the magnetic pickup **32** by the turntable tonearm **31,** which remains classic and unchanged, and therefore connected to the device housing, is insignificant due to the low mass of the tonearm or its mass balanced tonearm mechanism.
The device **100** thus improves the accuracy and credibility of the sound readings. Additionally, the need to push the turntable stylus **32** on the vinyl record **50** with more force is reduced, but otherwise it is required in case of vibrations because it is possible for the stylus **32** to skip between the individual grooves of the sound recording. Therefore the mechanical wear of the recording in the groove of the vinyl record **50** as well as the wear of the turntable stylus **32** is reduced. To ensure a steady rotation, the inertia excess mass of the turntable **10** and the whole device **100** is no longer required, hence the production and transport costs are reduced, and the transport of the device in the user's space alone is simplified. The whole gramophone **100** gains a higher level of aesthetic value and thus strengthens the entertainment and artistic experience of listening to music.

The described technical problem is solved with a gramophone **100,** whose essential characteristic is to ensure the levitation of the turntable **10** above the housing of the device **20** with the help of electromagnetic forces, created by permanent magnets **6** and **21** with the help of a correction electromagnetic coil **22,** and at the same time the rotation of the turntable **10** with the help of electromagnetic forces, created by permanent magnets **2** in correlation with programme controlled drive electromagnetic coils **25.**

The space between the upper surface of the housing **20** and the lower surface of the disc **1** determines the height of levitation. According to the created magnetic field strength and according to the weight of the turntable **10** the height of levitation can range between 1 and 200mm, preferably 40mm.

The turntable **10** consists of a disc **1** with a diameter equal or slightly bigger than the diameter of a "long play" vinyl record **50,** i.e. 290mm. The thickness of the turntable **10** is not essential for the invention and can vary between 8 and 100mm, preferably 25mm. The material of the disc is preferably plastic which is homogeneous, solid, at the same time of low specific weight, and it can be produced by jet moulding, pouring into moulds or it can be simply shaped and joined in some other way. In the geometric centre of the disc **1** there is a metal tip **7** for centring the vinyl record **50,** which is of standard dimensions and shapes for the needs of centring and fixing the vinyl records and is therefore not the subject of the invention.

Inside the disc **1,** grooves for the installation of permanent magnets **2,** which enable the rotation of the disc **1,** are deployed. The magnets **2** are preferably disc-shaped and are firmly secured in the disc **1.** They are preferably invisible to the user, since their outside circular edge is moved from the outside circular edge of the disc **1** into its inner part between 0 and 20mm, preferably 2mm. A wreath of disc permanent neodymium magnets are deployed at the outer rim in the shape of a ring with a distance between them of 2 to 10cm, preferably 5cm, or precisely the distance required by the pitch circle in the ring diameter to achieve an equal distribution of permanent magnets **2,** meaning the distance between them is the same, and at the same time the number of magnets must be a multiple of the number of electromagnetic coils **25.** According to the polarization direction of the permanent magnets **2,** they are turned in such a way that their magnetic forces are perpendicular to the disc **1,** meaning every following magnet in the ring is depending on the direction of the magnetic force field orientation turned by 180 degrees, or depending on the version not turned, and that there is an even number of magnets in the ring. The diameter of the disk-shaped permanent magnets **2** is between 5 and 20mm, preferably 10mm, the height of the magnet disc is between 1 and 10mm, preferably 4mm.

Disc **3,** made of soft iron, is rigidly secured to the upper surface of the disc **1** and is recessed into it throughout its entire thickness, so that the upper surface of the disc **1** remains even. It shares the geometrical centre **9** with the disc **1.** The thickness of the iron disc **3** ranges between 0.1 and 2.5mm, preferably 0.5mm. The outer diameter of the disc **3** is smaller than the disc **1** diameter by 1 to 10 mm, preferably 3mm, therefore when recessed into the disc **1** the edge is not visible and at the same time it is protected against corrosion. In its geometric centre, the iron disc **3** has a round hole with a diameter, allowing for the passage of a metal tip **7.** The iron disc **3** is intended to prevent the penetration of the magnetic forces of the permanent magnets **2, 5** and **6** upwards, where the electromagnetic pickup **32** is located during operation. The vertical distance of the iron disc **3** and the permanent magnets **2** is between 2 and 50mm, preferably 10mm, since by increasing the distance between the iron and the permanent magnets, the efficiency of neutralizing the transition of the permanent magnets' magnetic field through iron is greater.

The cover **4,** laid over the upper side of the disc **1,** is removable. Its diameter is preferably the same as the diameter of the disc **1.** The cover **4** is made of synthetic or natural materials, preferably jute or felt, or rubber and it provides better traction of the vinyl record **50** with the disc **1.** Besides its anti-slip properties the cover must also be antistatic, soft enough and suitable for regular manual cleaning.

The surfaces for specular reflection of light **5** are mounted in the circular channel **8,** which is recessed into the bottom surface of the disc **1** in depth of 1mm to 15mm, preferably 8mm. Width of the circular channel **8** is The quantity is preferably equal to the number of permanent magnets **2.** The material is not prescribed, however, with regard to its light reflectance it must be different enough from the rest of the lower surface of the disc **1,** for the light sensor to be able to accurately separate the difference of the light reflection. One or more light sensors **26,** preferably two, scan the rotation speed of the disc **1** through the reflection of the specular surfaces **5** and provide the process unit with this information **27,** and thereby enable it to properly regulate the speed of changing the direction and strength of the electromagnetic field, produced by the electromagnetic coils **25** in the housing **20** of the device **100,** whose magnetic forces cross the magnetic forces of the permanent magnets **2** in the disk **1** and thus create the required torque for acceleration, the maintaining of a constant speed and the deceleration of the turntable's **10** rotation.

The levitation of the turntable **10** with all the integrated components is enabled by a permanent neodymium magnet **6,** preferably in the shape of a uniform magnetic circular plate with its centre in the geometric centre of the disc **1,** where the rotation axis **9** also passes through. The inner diameter of the circular plate is between 2 and 8cm, preferably 4cm and the cross section of the magnet **6** is preferably 10 × 10mm. This magnet is just like the magnets **2** rigidly mounted inside the disc **1.** The magnet **6** is preferably located in the centre of the disc **1** thickness, and is thus mechanically secured and hidden from sight. Its magnetic forces travel in the direction, perpendicular to the surface of the disc 1, and the magnetic field reflects downwards, this is the direction in which the forces reflect from the permanent magnets **21,** mounted in the housing **20** of the device **100** and whose magnetic forces are directed vertically upwards.

The levitation of the disc **1** with all the integrated components from **2** to **7** is enabled by a group of permanent neodymium magnets **21,** which are arranged in a ring of the same diameter as the diameter of the magnet **6.** The centre of the ring is located in the centre of the rotation axis **9.** The magnets **21** are closed inside the housing **20** of the device **100,** preferably just below its surface. The number of magnets can range from 1 to 50, preferably 4. In the version with four magnets, they are rectangular in shape, or in the shape of a circular sector of the same diameter as the ring, in which they are installed. In the version with four magnets, the length of the individual magnets is preferably 50mm, and the rectangular cross-section preferably measures 10 × 10mm. The magnets are arranged across the circle equally spaced from each other, they are rigidly fastened in the housing **20,** and they are preferably hidden from sight. The magnetic forces of the permanent magnets **21** are directed vertically upwards, i.e. perpendicular to the surface of the disc **1** and in the opposite direction as the forces of the magnet **6.** Thus, in-between a magnetic reflection is created.

The correction electromagnetic coils **22** are responsible for balancing and centring the position of the turntable **10,** which would otherwise be thrown from the centre axis **9** by the magnetic field between the magnets **6** and **21.** The coils **22** are evenly deployed throughout the ring with the centre in the axis **9,** which is preferably of such a diameter that the inner edge of the coils **22** is separated from the outer edge of the permanent magnets **21** only by a thin electrical insulation layer. The coils **22** are laid horizontally, their forces travel vertically and all reflect upwards. By detecting changes in the electromagnetic field of the four coils **22,** a microcontroller **24** determines the deviation of the turntable **10** from the axis **9** and on the basis of this data it increases the current power of those coils which are located in the position where the turntable **10** horizontally deviated, and thus the turntable **10** is returned back to the rotation axis **9.**

Preferably, two triplets or groups of three drive electromagnetic coils **25** are evenly distributed throughout the horizontal ring at a distance of 120 degrees, with the centre in the axis **9,** with the preferable minimum distance from the outer edge of the horizontal ring of correction coils **22.** In order to identify the groups and their according coils, the coils are indicated with **25a** and **25b,** respectively, wherein the letters a and b are intended to indicated the respective group. Accordingly, each coil group has three coils 25a and 25b, respectively, which are arranged at an angle of 120 degrees among themselves in the respective group. Between each other, these two triplets or groups of coils **25** are angularly offset by 40 to 80 degrees, preferably by 50 and 70 degrees, respectively. This offset angle is measured between two neighbouring coils **25a, 25b** of the respective (different) group. The preferred angle of 70 degrees can be seen between coils **25b** (upper right side of the figure) and **25a** (just beneath the middle of the figure) on the right side in fig. 8. The preferred angle of 50 degree is illustrated between coils **25a** (lower left side of the figure) and **25b** (just above the middle of the figure) on the left side in fig. 8. Unlike the correction coils **22,** the drive coils **25** are set vertically and towards the geometric centre **9,** and their magnetic forces travel in a horizontal direction tangential to the circle of rotation. In a specific unit of time all the magnetic forces of coils **25** are directed in the same direction. The required torque for rotation is ensured by the reflective attractive force between the magnetic forces of the permanent magnets **2** and the electromagnetic forces of the coils **25.**

During operation, the drive coils **25** must constantly change the direction of the magnetic forces, in order to push the nearest magnet **2** away from the disc **1,** and at the same time pull the next one closer. When the disc **1** rotates by a defined angle, the procedure is repeated, however, this time the direction of the electromagnetic forces changes, which means that the electromagnetic forces of the coils **25** constantly pulsate in various directions. In other words, the coils 25a, 25b are adapted to act in a pushing and pulling manner on the magnets 2, wherein when the group of coils 25a pushes the other group of coils 25b pulls and vice versa.

Where exactly a specific permanent magnet **2** is located during disc **1** rotation, in relation to the magnetic field of the coils **25,** is preferably established by two light sensors **26** in the housing **20** through the specular reflection surfaces **5** in the disc 1. Information is then forwarded to the control unit **27,** which, according to the required acceleration, maintenance of the speed or disc 1 braking, executes the relevant command on the power and direction of the electric current to create a magnetic field of coils **25.**

There are so many programmes to maintain the speed of the turntable **10,** as there are different requirements for the number of revolutions according to the types of vinyl records **50.**

Unwanted vertical oscillations of the turntable **10,** which occur during rotation on an uneven cushion of electromagnetic forces, are preferably cushioned by the same system of coils **25** and permanent magnets **2,** which are intended to drive the turntable **10.** With the correct determination of the time, power and direction for the magnetic field of the coils **25,** there are no opposite effects of both functions between the magnetic forces. The vertical operation of the coil **25** in either direction shall be included, if necessary, and only then, when the coil **25** is located directly under the magnet **2,** or more precisely 1 to 10 hundredths, preferably 2 hundredths of a second earlier, before both elements **2** and **25** are vertically covered and preferably the same amount of time after this transition. Coils **25,** which have a predominantly horizontal impact on the requirements for the rotation of the turntable **10,** thus operate vertically in the meantime between one and the other horizontal impulses if necessary. By dividing the time intervals of the same coil **25,** two different functions are thus carried out in a chronological order, one is the drive function for the rotation of the turntable **10** and the other is the micro-stabilizing function for cushioning its vertical oscillations.

To take an example, if the distance between the permanent magnets **2,** distributed on the outer circle of the disc **1,** is 50mm and thereby the time between the transition of two adjacent permanent magnets **2** above the coil **25** is e.g. 0.11 seconds, then preferably for the first 0.03 seconds of this interval, the coil **25** functions as a vertical stabilizer of the turntable **10** and the central part of the interval between the preferable 0.04 and 0.09 seconds is used for driving the turntable **10,** the remaining time of this interval is again used for its stabilization. Detection of unwanted vertical fluctuations of the turntable is enabled by an optical element **26a,** which is installed in the housing **20** and is located at a distance from the central axis **9,** so as to illuminate the circle of the lower surface of the disc **1** near its outer diameter and thus measure the differences in distance of the disc **1** to the housing **20.**
The element for determining the distance **26a** is recessed in the housing **20** to such an extent that only its top part reaches the surface of the upper part of the housing **20.** The element **26a** is preferably composed of an optical sensor for determining the distance. Through a microcontroller **27** the optical sensor forwards the command for the required power and direction of the electric current in the electromagnetic coils **25.** With the appropriate change of power and/or direction of the electromagnetic field in the for this provided time interval of the turntable **10** rotation, the electromagnetic coils then correct or annul the turntable's vertical oscillation.

The purpose of the support feet **28** with the corresponding servomotors **29** is to support and place down the turntable **10** while the device **100** is in the resting position. The magnetic field between the permanent magnets **6** and **21** is also present when the device is switched off, however, the system for stabilizing and centring **22** and **24** is turned off then. In this way, when switching off the system, the turntable **10** could be thrown from the axis **9,** which could lead to the failure of the device and music medium, and the normal restart would also be disabled. Because of this, there are four support feet **28** installed on the housing **20** of the gramophone **100.** The support feet are preferably of a circular cross section and conical in shape in the upper part. The feet **28** pass through the upper plate of the housing **20** through the corresponding holes **28a,** preferably using a spindle mechanism. Lifting feet with servomotors are a standard product and are not part of the invention. Holes **28a** are evenly distributed throughout the imaginary circle with its centre in the axis **9.** The diameter of the imaginary circle with the layout of the holes **28a** and thereby the feet **28** in the housing **20** is the same as the mean diameter of the circular groove **8** in the turntable **10.**

The diameter of the feet **28** is between 5 and 20mm, preferably 10 mm, the height of their conically shaped tip is between 1 and 10mm, preferably 3mm. The feet **28** in their raised position with the conically shaped tip rest against the circular groove **8** of the disc **1,** the width of which is from 0.5 to 10mm, preferably mm less than the diameter of the feet **28,** anyhow the diameter must be of such a size that the tip of the feet **28** cone can in no way touch the light reflector **5,** which lies at the bottom of the groove **8.** There is a slope on the two outer edges of the circular groove **8.** The angle of this slope is preferably the same as the angle of the feet **28** cone. In this way, resting the turntable **10** against the feet **28** does not cause wear and the deformation of the contact surfaces, and at the same time the construction allows the maximum centring of the turntable **10** in the axis **9,** while the device **100** is in the resting position. Thereby, a successful restart is also provided.

While inactive, the feet **28** are hidden in the housing **20,** so only their conically shaped tops can be seen. In this way, the holes **28a** are closed, which prevents dust from entering the housing **20,** and at the same time the monolithic aesthetic image of the housing **20** is minimally disrupted. Using servomotors **29,** the feet **28** rise from the housing **20** vertically synchronized up to a height which exceeds the height of the turntable's **10** levitation on a magnetic cushion. Before playing music, first the electromagnetic mechanism (**22, 24**) for the control of the rotation centering is turned on, then the servomotors **29** pull the feet **28** in the housing **20** through the corresponding holes **28a.** After playing the last track on the vinyl record **50,** or just before switching off the device **100,** the servomotors **29** lift the feet **28** into the upright position, thereby mechanically supporting the turntable **10** and thus preventing the turntable from falling when the control electromagnetic mechanism for rotation centring (**22, 24**) is deactivated. The feet **28** lift to such an extent that in the upright position the disc **1** is lifted by 1 to 20mm, preferably 3mm above the levitation level on the magnetic cushion. During resting position or while the device **100** is switched off, the feet assume the entire weight of the turntable **10** and the vinyl record **50.**

The turntable **10** can also be supported in a different way with the emphasis that during the resting position the turntable **10** is provided with a stable mechanical support in at least three positions, and that the mechanism is aesthetically sustainable and as hidden as much as possible while playing music.

When the device **100** is turned on, the stabilizing magnetic field of the coils **22** is automatically activated. When the music carrier **50** is set correctly and the tonearm **31** is activated, the feet **28** are automatically folded in the housing **20,** and then the system for electromagnetically driving the turntable **10** is activated.

The ring light **60** provides ambient lighting of the device during operation. The ring is recessed into the upper surface of the housing **20,** preferably deep enough so that the edge surface of the ring is level with the surface of the housing. The cross-section of the ring is preferably rectangular in shape, the thickness of the ring tape is between 1 and 30mm, preferably 2mm, and the width of the tape is between 5 and 40mm, preferably 11mm. The internal diameter of the ring **60** is between 100 and 350mm, preferably 230mm, and it is centred in the axis **9.** The ring light **60** is made of a light permeable material. Inside the housing **20,** the ring **60** is fixed on a circular carrier **61,** which is preferably secured on the inner side of the upper surface of the housing **20.** The diameter of the carrier **61** is preferably 30mm larger than the diameter of the ring **60.** On its inner side, there is a LED strip **62,** which glows towards the centre axis **9.** Most of the light is intercepted by the ring light **60,** which transmits it in a scattered shape vertically upwards to the surface of the housing **20** and then further to the turntable **10.** Thus, the gap between the housing of the device **20** and the levitating turntable **10** is additionally visually emphasized. The device **100** alone provides for the intense and light colour. A classic remote controller of the LED strip (not shown) can also be used for this.

The device **100** is universal and suitable for playing music of all known types and sizes of analogue sound carriers in the form of a vinyl record **50.** The basic function of the gramophone device **100** is to play music. At the same time the device also offers a very intense level of visual experience.

In addition to being useful in the context of turntables, the system of levitation and rotation of the turntable is also suitable for various other devices (not shown), since due to its special visual experience it attracts the attention of the observers. For example, the turntable, rotating and levitating on magnetic forces, is suitable to display products in showroom windows and similar. In this case, the system for controlling the speed of rotation must allow for adjusting different, especially lower speeds for the observer to be able to see the product, displayed on the turntable, from all sides. The levitating tables and housings, made for this purpose, can also be of bigger or smaller layouts and load capacities than the turntable **10,** in accordance with their intended purpose and application. In these cases, the device can also be designed in such way that the housing cannot even be seen, since it is hidden underneath the display window. Thus, the housing can be aesthetically less perfected, however, the visual effect of levitation can be even more emphasized.

It is understandable that the design of the device may be in terms of detail in shaping and connecting the basic components, also slightly different than the design described above, however, the main characteristics and features of the invention remain unchanged.

It is understandable that an expert in this field, based on the knowledge of the invention, can also design slightly different cases than the one described above, without thereby circumventing the basic characteristics of the invention, as defined in the following patent claims:

## Claims

1. A gramophone (100), including a turntable (10) being adapted to support a sound recording carrier (50), a housing (20), a tonearm carrier (30), a tonearm (31), and a magnetic pickup with a turntable stylus (32), wherein the turntable (10) comprises a disc (1), wherein the disc (1) has in its geometric center on its upper side a metal tip (7) adapted to center a sound recording carrier (50), wherein a diameter of the disc (1) is equal to or greater than the diameter of a long play vinyl record (50), which is 280 to 300,
wherein the gramophone further comprises:
a first turntable-side permanent magnet (6) mounted inside the disc (1), at least one first housing-side permanent magnet (21), and first electromagnetic correction coils (22), the electromagnetic correction coils (22) being adapted to control a levitation of the turntable (10) above the housing (20) by means of electromagnetic forces, which are created by the turntable-side permanent magnet (6) and by the housing-side permanent magnet (21),
second turntable-side permanent magnets (2) and drive electromagnetic coils (25) adapted to control a rotation of the turntable (10) by means of electromagnetic forces, which are created by the second turntable-side permanent magnets (2), wherein the second turntable-side permanent magnets (2) are distributed at an outer rim of the disc (1) in the shape of a ring, wherein the second turntable-side permanent magnets (2) are equally distributed along a circumferential direction of the disc (1) and wherein a distance between two neighboring second turntable-side permanent magnets (2) is 2cm to 10cm, wherein the number of second turntable-side permanent magnets (2) is a multiple of the number of drive electromagnetic coils (25), and
a gap between an upper surface of the housing (20) and a lower surface of the turntable (10) in a range from 1 to 200mm, said gap defining the height of levitation in accordance to the created magnetic field strength, **characterized in that**
the disc (1) has a plurality of recesses or grooves, each recess or groove being adapted to house one of the second turntable-side permanent magnets (2) and wherein the recesses or grooves have a bottom being part of a lower surface of the disc, and an opening directed to the inside or to the upper surface of the disc (1), so that the second turntable-side permanent magnets (2) are secured in the disc (1) invisibly to a user.

2. The gramophone according to claim 1, wherein the second turntable-side permanent magnets (2) are disc-shaped having a diameter from 5 to 20mm, wherein the height of the second turntable-side permanent magnet (2) is between 1 and 10mm.

3. The gramophone according to claims 1 and 2, wherein a second disc (3) made of soft iron is rigidly secured to the upper surface of the disc (1) and is recessed throughout its entire thickness into the disc (1), so that the second disc (3) is not visible to a user and wherein the thickness of the second disc (3) ranges from 0.1 to 2.5mm, the outer diameter of the second disc (3) is smaller than the diameter of the disc (1) by 1 to 10mm, and wherein the second disc (3) has in its geometric center a round hole with a diameter that allows the passage of the metal tip (7) of disc (1) and wherein a vertical distance of the second disc (3) to the first and second turntable-side permanent magnets (2, 6) is from 2 to 50mm.

4. The gramophone according to claims 1 to 3, wherein the disc (1) comprises at its lower side a plurality of reflection surfaces (5) for the specular reflection of light, wherein the reflection surfaces (5) are recessed in the lower surface of the disc (1) and wherein the reflection surfaces (5) are evenly distributed along a ring shape.

5. The gramophone according to claims 1 to 4, wherein the housing comprises a plurality of light sensors (26), adapted to separate a difference of light reflection and to thus scan the rotational speed of the disc (1) through the reflection of the reflection surfaces (5).

6. The gramophone according to any of the preceding claims, wherein the first housing-side permanent magnets (21) are arranged in a ring of the same diameter as the diameter of the first turntable-side permanent magnet (6), wherein the first housing-side permanent magnets (21) are provided inside the housing (20) below its surface, wherein the number of first housing- side permanent magnets (21) is 1 to 50.

7. The gramophone according to any of the preceding claims, wherein electromagnetic correction coils (22) are evenly distributed within the ring of first housing- side permanent magnets (21).

8. The gramophone according to any of the preceding claims, wherein two times three drive electromagnetic coils (25a, 25b) are distributed across the horizontal ring in the distance of 120 angular degrees, with the center in the axis (9), wherein these two triplets of coils (25a, 25b) are between each other angularly offset by 40 to 80 degrees, respectively.

9. The gramophone according to any of the preceding claims, wherein it further comprises a plurality of support feet (28) installed on the housing (20) of the gramophone (100), adapted to mechanically support and deposit the turntable (10) while the gramophone (100) is in its resting position and wherein each support foot (28) has a circular cross-section and a conical shape in its upper part, so the turntable (10) is supported by the tips of these cones.

10. The gramophone according to claim 9, wherein the feet (28) pass vertically through an upper plate of the housing (20) through corresponding holes (28a), using a spindle mechanism and a servomotor (29), wherein the holes (28a) are evenly distributed along an imaginary circle with its center in the axis (9), and the diameter of the imaginary circle is the same as the mean diameter of a circular groove (8) in the turntable (10) and wherein the feet (28) in their lower inactive level are hidden in the housing (20) to such an extent that their conical upper parts remain visible, wherein the feet (28) are adapted to be lifted evenly and synchronized up to a height which exceeds the height of the turntable (10) by 1 to 10mm.

11. The gramophone according to claim 9, wherein the diameter of the feet (28) is from 5 to 20mm, the height of the conically shaped upper part is from 1 to 10mm, wherein the feet (28) in their raised position rest with the conically shaped tip against the circular groove (8) of the disc (1), the width of the circular groove being from 0.5 to 10mm less than the diameter of the feet (28) cross-section.

12. The gramophone according to any one of the previous claims, wherein the gramophone further comprises a switch (70) adapted to turn on and off the gramophone, wherein the switch (70) is adapted to take three positions, first for switching off the device (100), secondly for turning on and rotating the turntable (10) at 33.3 revolutions per minute, and thirdly for turning on and rotating the turntable at 45 revolutions per minute, a system for ambient lighting (60-62), the system having a ring light (60) which is recessed in the upper surface of the housing (20), so deep that the edge surface of the ring light (60) is level with the surface of the housing (20) and a control unit (27) adapted to control levitation of and rotation of the turntable (10) by controlling the power and direction of electric current to create according respective magnetic fields of the first electromagnetic correction coils (22) and/or of the drive electromagnetic coils (25).

## Patentansprüche

1. Grammophon (100) mit einem Drehteller (10), der dazu eingerichtet ist, einen Tonaufzeichnungsträger (50) zu tragen, einem Gehäuse (20), einem Tonarmträger (30), einem Tonarm (31) und einem magnetischen Aufnehmer mit einem Drehstift (32), wobei der Drehteller (10) eine Scheibe (1) aufweist, wobei die Scheibe (1) in ihrer geometrischen Mitte an ihrer Oberseite eine Metallspitze (7) aufweist, die zur Zentrierung eines Tonaufzeichnungsträgers (50) eingerichtet ist, wobei der Durchmesser der Scheibe (1) gleich oder größer ist als der Durchmesser einer Vinyl-Langspielplatte (50), der 280 bis 300 beträgt,
das Grammophon weiter umfassend:
einen ersten, innerhalb der Scheibe (1) angeordneten drehtellerseitigen Permanentmagneten (6), mindestens einen ersten gehäuseseitigen Permanentmagneten (21) und erste elektromagnetische Korrekturspulen (22), wobei die elektromagnetischen Korrekturspulen (22) dazu eingerichtet sind, mittels elektromagnetischer Kräfte, die durch den drehtellerseitigen Permanentmagneten (6) und den gehäuseseitigen Permanentmagneten (21) erzeugt werden, ein Schweben des Drehtellers (10) über dem Gehäuse (20) zu steuern,
zweite drehtellerseitige Permanentmagneten (2) und elektromagnetische Antriebsspulen (25), die dazu eingerichtet sind, eine Drehung des Drehtellers (10) mittels elektromagnetischer Kräfte, die von den zweiten drehtellerseitigen Permanentmagneten (2) erzeugt werden, zu steuern, wobei die zweiten drehtellerseitigen Permanentmagneten (2) am äußeren Rand der Scheibe (1) ringförmig verteilt sind, wobei die zweiten drehtellerseitigen Permanentmagneten (2) gleichmäßig entlang einer Umfangsrichtung der Scheibe (1) verteilt sind und wobei ein Abstand zwischen zwei benachbarten zweiten drehtellerseitigen Permanentmagneten (2) 2 cm bis 10 cm beträgt, wobei die Anzahl der zweiten drehtellerseitigen Permanentmagneten (2) ein Vielfaches der Anzahl der elektromagnetischen Antriebsspulen (25) beträgt, und
einen Spalt zwischen einer oberen Oberfläche des Gehäuses (20) und einer unteren Oberfläche des Drehtellers (10) in einem Bereich von 1 bis 200 mm, wobei der Spalt die Schwebehöhe in Abhängigkeit von der erzeugten Magnetfeldstärke definiert, **dadurch gekennzeichnet, dass**
die Scheibe (1) eine Mehrzahl von Aussparungen oder Nuten aufweist, wobei jede Aussparung oder Nut eingerichtet ist, einen der zweiten drehtellerseitigen Permanentmagneten (2) aufzunehmen, und wobei die Aussparungen oder Nuten einen Boden aufweisen, der Teil einer unteren Fläche der Scheibe ist, und eine Öffnung, die nach innen oder zur oberen Fläche der Scheibe (1) gerichtet ist, so dass die zweiten drehtellerseitigen Permanentmagneten (2) unsichtbar für den Benutzer in der Scheibe (1) befestigt sind.

2. Grammophon nach Anspruch 1, **dadurch gekennzeichnet, dass** die zweiten drehtellerseitigen Permanentmagneten scheibenförmig mit einem Durchmesser von 5 bis 20 mm ausgebildet sind, wobei die Höhe des zweiten drehtellerseitigen Permanentmagneten (2) zwischen 1 und 10 mm beträgt.

3. Grammophon nach Anspruch 1 und 2, **dadurch gekennzeichnet, dass** eine zweite Scheibe (3) aus Weicheisen starr an der Oberseite der Scheibe (1) befestigt ist und über seine gesamte Dicke in die Scheibe (1) eingelassen ist, so dass die zweite Scheibe (3) für den Benutzer unsichtbar ist und wobei die Dicke der zweiten Scheibe (3) im Bereich von 0,1 bis 2,5 mm liegt, der Außendurchmesser der zweiten Scheibe (3) ist kleiner als der Durchmesser der Scheibe (1) um 1 bis 10 mm, und wobei die zweite Scheibe (3) in ihrer geometrischen Mitte ein Rundloch mit einem Durchmesser aufweist, der den Durchtritt der Metallspitze (7) der Scheibe (1) ermöglicht und wobei ein vertikaler Abstand der zweiten Scheibe (3) zu dem ersten und zweiten drehtellerseitigen Permanentmagneten (2, 6) 2 bis 50 mm beträgt.

4. Grammophon nach Anspruch 1 bis 3, wobei die Scheibe (1) an ihrer Unterseite eine Mehrzahl von Reflexionsflächen (5) zur spiegelnden Reflexion von Licht aufweist, wobei die Reflexionsflächen (5) in der Unterseite der Scheibe (1) ausgespart sind und wobei die Reflexionsflächen (5) gleichmäßig entlang einer Ringform verteilt sind.

5. Grammophon nach Anspruch 1 bis 4, wobei das Gehäuse eine Mehrzahl von Lichtsensoren (26) umfasst, die dazu eingerichtet sind, eine Differenz der Lichtreflexion zu trennen und so die Rotationsgeschwindigkeit der Scheibe (1) durch die Reflexion der Reflexionsflächen (5) abzutasten.

6. Grammophon nach einem der vorhergehenden Ansprüche, wobei die ersten gehäuseseitigen Permanentmagneten (21) in einem Ring gleichen Durchmessers wie der Durchmesser des ersten drehtellerseitigen Permanentmagneten (6) angeordnet sind, wobei die ersten gehäuseseitigen Permanentmagneten innerhalb des Gehäuses (20) unterhalb seiner Oberfläche vorgesehen sind, wobei die Anzahl der ersten gehäuseseitigen Permanentmagneten (21) 1 bis 50 beträgt.

7. Grammophon nach einem der vorhergehenden Ansprüche, **dadurch gekennzeichnet, dass** die elektromagnetischen Korrekturspulen (22) innerhalb des Rings von ersten gehäuseseitigen Permanentmagneten (21) gleichmäßig verteilt sind.

8. Grammophon nach einem der vorhergehenden Ansprüche, **dadurch gekennzeichnet, dass** zwei mal drei elektromagnetische Antriebsspulen (25a, 25b) im Abstand von 120 Winkelgraden mit der Mitte in der Achse (9) über den horizontalen Ring verteilt sind, wobei diese beiden Tripletts von Spulen (25a, 25b) jeweils um 40 bis 80 Grad winkelversetzt zueinander liegen.

9. Grammophon nach einem der vorhergehenden Ansprüche ferner umfassend eine Vielzahl von Stützfüßen (28), die am Gehäuse (20) des Grammophons (100) installiert und angepasst sind, um den Drehteller (10) mechanisch zu stützen und abzulegen, während sich das Grammophon (100) in seiner Ruheposition befindet, und wobei jeder Stützfuß (28) einen kreisförmigen Querschnitt und eine konische Form in seinem oberen Teil aufweist, so dass der Drehteller (10) von den Spitzen dieser Kegel getragen wird.

10. Grammophon nach Anspruch 9, wobei die Füße (28) vertikal durch eine obere Platte des Gehäuses (20) durch entsprechende Löcher (28a) hindurchtreten, mit einem Spindelmechanismus und einem Servomotor (29), wobei die Löcher (28a) gleichmäßig entlang eines gedachten Kreises mit seiner Mitte in der Achse (9) verteilt sind und der Durchmesser des gedachten Kreises gleich dem mittleren Durchmesser einer Kreisnut (8) im Drehteller (10) ist und wobei die Füße (28) in ihrem unteren inaktiven Niveau so weit im Gehäuse (20) verborgen sind, dass ihre konischen Oberteile sichtbar bleiben, wobei die Füße (28) eingerichtet sind, gleichmäßig angehoben und auf einer Höhe synchronisiert zu werden, die die Höhe des Drehtellers (10) um 1 bis 10 mm übersteigt.

11. Grammophon nach Anspruch 9, wobei der Durchmesser der Füße (28) 5 bis 20 mm beträgt, die Höhe des konisch geformten Oberteils 1 bis 10 mm beträgt, wobei die Füße (28) in ihrer angehobenen Stellung mit der konisch geformten Spitze an der Kreisnut (8) der Scheibe (1) anliegen, wobei die Breite der Kreisnut 0,5 bis 10 mm kleiner als der Durchmesser der Füße (28) ist.

12. Grammophon nach einem der vorhergehenden Ansprüche, das Grammophon ferner umfassend einen Schalter (70), der zum Ein- und Ausschalten des Grammophons eingerichtet ist, wobei der Schalter (70) eingerichtet ist, um drei Stellungen anzunehmen, eine erste zum Abschalten der Vorrichtung (100), eine zweite zum Einschalten und Drehen des Drehtellers (10) bei 33,3 Umdrehungen pro Minute und eine dritte zum Einschalten und Drehen des Drehtellers bei 45 Umdrehungen pro Minute, ein System zur Umgebungsbeleuchtung (60-62), wobei das System ein Ringlicht (60) aufweist, das in der oberen Oberfläche des Gehäuses (20) ausgespart ist, so tief dass die Randfläche des Ringlichts (60) mit der Oberfläche des Gehäuses (20) ausgerichtet ist, und eine Steuereinheit (27), die angepasst ist, das Schweben und die Drehung des Drehtellers (10) durch Steuern der Leistung und der Richtung des elektrischen Stroms zu steuern, um die jeweiligen Magnetfelder der ersten elektromagnetischen Korrekturspulen (22) und/oder der elektromagnetischen Antriebsspulen (25) zu erzeugen.

## Revendications

1. Gramophone (100) comprenant un plateau tournant (10) étant conçu pour supporter un support d'enregistrement sonore (50), un boîtier (20), un support de bras de lecture (30), un bras de lecture (31), et un capteur magnétique avec une pointe de lecture de plateau tournant (32), le plateau tournant (10) comprenant un disque (1), le disque (1) ayant dans son centre géométrique sur sa face supérieure une pointe métallique (7) conçue pour centrer un support d'enregistrement sonore (50), le diamètre du disque (1) étant supérieur ou égal au diamètre d'un disque vinyle longue durée (50), qui est de 280 à 300,
le gramophone comprenant en outre :
un premier aimant permanent du côté du plateau tournant (6) monté à l'intérieur du disque (1), au moins un premier aimant permanent du côté du boîtier (21) et les premières bobines de correction électromagnétiques (22), les bobines de correction électromagnétiques (22) étant conçues pour commander une lévitation du plateau tournant (10) au-dessus du boîtier (20) au moyen de forces électromagnétiques, qui sont créées par l'aimant permanent du côté du plateau tournant (6) et par l'aimant permanent du côté du boîtier (21),
des seconds aimants permanents du côté du plateau tournant (2) et des bobines électromagnétiques d'entraînement (25) conçus pour commander la rotation du plateau tournant (10) au moyen de forces électromagnétiques, qui sont créées par les seconds aimants permanents du côté du plateau tournant (2), les seconds aimants permanents du côté du plateau tournant (2) étant répartis au niveau d'un bord externe du disque (1) en forme d'anneau, les seconds aimants permanents du côté du plateau tournant (2) étant répartis de manière égale le long d'une direction circonférentielle du disque (1) et une distance entre deux seconds aimants permanents du côté du plateau tournant (2) étant de 2 cm à 10 cm, le nombre de seconds aimants permanents du côté du plateau tournant (2) étant un multiple du nombre de bobines électromagnétiques d'entraînement (25), et
un espace entre une surface supérieure du boîtier (20) et une surface inférieure du plateau tournant (10) dans une plage de 1 à 200 mm, ledit espace définissant la hauteur de lévitation en fonction de la force du champ magnétique créée, **caractérisé en ce que**
le disque (1) comporte une pluralité d'évidements ou de rainures, chaque évidement ou rainure étant conçue pour loger un des seconds aimants permanents du côté du plateau tournant (2) et les évidements ou rainures ayant un fond faisant partie d'une surface inférieure du disque, et une ouverture dirigée vers l'intérieur ou vers la surface supérieure du disque (1), de telle sorte que les seconds aimants permanents du côtés du plateau tournant (2) sont fixés dans le disque de façon invisible à un utilisateur.

2. Gramophone selon la revendication 1, dans lequel les seconds aimants permanents du côté du plateau tournant (2) sont en forme de disque ayant un diamètre de 5 à 20 mm, la hauteur du second aimant permanent du côté du plateau tournant (2) étant comprise entre 1 et 10 mm.

3. Gramophone selon les revendications 1 et 2, dans lequel un second disque (3) en fer doux est fixé de manière rigide à la surface supérieure du disque (1) et est en retrait sur toute sa longueur dans le disque (1), de sorte que le second disque (3) n'est pas visible à l'utilisateur et l'épaisseur du second disque (3) varie de 0,1 à 2,5 mm, le diamètre externe du second disque (3) est inférieur au diamètre du disque (1) de 1 à 10 mm, et le second disque (3) étant doté en son centre géométrique d'un trou rond ayant un diamètre qui permet le passage de la pointe métallique (7) du disque et une distance verticale du second disque (3) vers les premier et second aimants permanents du côté du plateau tournant (2, 6) étant de 2 à 50 mm.

4. Gramophone selon les revendications 1 à 3, dans lequel le disque (1) comprend au niveau de son côté inférieur une pluralité de surfaces de réflexion (5) pour la réflexion spéculaire de la lumière, les surfaces de réflexion (5) étant en retrait dans la surface inférieure du disque (1) et les surfaces de réflexion (5) étant réparties uniformément le long d'un forme annulaire.

5. Gramophone selon les revendications 1 à 4, le boîtier comprenant une pluralité de capteurs de lumière (26), aptes à séparer une différence de réflexion de lumière et à balayer ainsi la vitesse de rotation du disque (1) par la réflexion des surfaces de réflexion (5).

6. Gramophone selon l'une quelconque des revendications précédentes, les premiers aimants permanents du côté du boîtier (21) étant disposés dans un anneau de même diamètre que le diamètre du premier aimant permanent du côté du plateau tournant (6), les premiers aimants permanents du côté du boîtier (21) étant disposés à l'intérieur du boîtier (20) au-dessous de sa surface, le nombre de premiers aimants permanents du côté du boîtier (21) étant de 1 à 50.

7. Gramophone selon l'une quelconque des revendications précédentes, dans lequel des bobines de correction électromagnétiques (22) sont réparties uniformément à l'intérieur de l'anneau des premiers aimants permanents du côté du boîtier (21).

8. Gramophone selon l'une quelconque des revendications précédentes, dans lequel deux fois trois bobines électromagnétiques d'entraînement (25a, 25b) sont réparties sur l'anneau horizontal à une distance de 120 degrés angulaires, avec le centre dans l'axe (9), ces deux triplets de bobines (25a, 25b) étant décalés l'un par rapport à l'autre selon un angle de 40 à 80 degrés, respectivement.

9. Gramophone selon l'une quelconque des revendications précédentes, dans lequel il comprend en outre une pluralité de pieds de support (28) installés sur le boîtier (20) du gramophone (100), conçus pour supporter et déposer mécaniquement le plateau tournant (10) tandis que le gramophone (100) est dans sa position de repos et chaque pied de support (28) a une section transversale circulaire et une forme conique dans sa partie supérieure, de telle sorte que le plateau tournant (10) est supporté par les pointes de ces cônes.

10. Gramophone selon la revendication 9, dans lequel les pieds (28) passent verticalement à travers une plaque supérieure du boîtier (20) à travers des trous correspondants (28a), à l'aide d'un mécanisme de broche et d'un servomoteur (29), les trous (28a) étant régulièrement répartis le long d'un cercle imaginaire avec son centre dans l'axe (9), et le diamètre du cercle imaginaire étant le même que le diamètre moyen d'une rainure circulaire (8) dans le plateau tournant (10) et les pieds (28) dans leur niveau inactif inférieur étant cachés dans le boîtier (20) de telle manière que leurs parties supérieures coniques restent visibles, les pieds (28) étant prévus pour être soulevés de façon régulière et synchronisée jusqu'à une hauteur qui dépasse la hauteur du plateau tournant (10) de 1 à 10 mm.

11. Gramophone selon la revendication 9, dans lequel le diamètre des pieds (28) est de 5 à 20 mm, la hauteur de la partie supérieure conique est de 1 à 10 mm, les pieds (28) dans leur position relevée étant en appui avec la pointe conique contre la rainure circulaire (8) du disque (1), la largeur de la rainure circulaire étant de 0,5 à 10 mm inférieure au diamètre des pieds (28).

12. Gramophone selon l'une quelconque des revendications précédentes, le gramophone comprenant en outre un commutateur (70) conçu pour allumer et éteindre le gramophone, le commutateur (70) étant conçu pour prendre trois positions, la première pour éteindre le dispositif (100), la deuxième pour allumer et faire tourner le plateau tournant (10) à 33,3 tours par minute, et la troisième pour allumer et faire tourner le plateau tournant à 45 tours par minute, un système d'éclairage ambiant (60-62), le système ayant une lumière annulaire (60) qui est évidée dans la surface supérieure du boîtier (20), avec une telle profondeur que la surface du bord de la lumière annulaire (60) est au niveau de la surface du boîtier (20) et une unité de commande (27) conçue pour commander la lévitation et la rotation du plateau tournant (10) par commande de la puissance et de la direction du courant électrique pour créer des champs magnétiques respectifs des premières bobines de correction électromagnétiques (22) et/ou des bobines électromagnétiques d'entraînement (25).
